# EUROPÄISCHE PATENTANMELDUNG

(11) **EP 2 682 449 A1**
(43) Veröffentlichungstag der Anmeldung: **08.01.2014**
(21) Anmeldenummer: 13186687.3
(22) Anmeldetag: 17.02.2010
(51) Int. Cl.: C10G 45/44, C10G 45/48, C10G 45/50, C10G 45/46

(54) **Verfahren zur Herstellung von naphthenischen Prozessölen mit niedrigem Gehalt an polycyclischen Aromaten**

(62) Teilanmeldung aus: 10001605.4
(71) Anmelder: Klaus Dahleke KG, 20457 Hamburg (DE)
(72) Erfinder: Hansen, Nils, 20457 Hamburg (DE)
(74) Vertreter: Kossak, Sabine

(57) **Zusammenfassung**

Gegenstand der Erfindung ist ein Verfahren zur Herstellung von naphthenischen Prozessölen, die einen hohen Anteil an naphthenischen Kohlenstoffatomen (C_{N} ) von 45 bis 65 Gew.-% und einen geringen Gehalt an polycyclischen Aromaten von weniger als 3 Gew.-%, bestimmt nach IP 346, aufweisen, durch Hydrierung eines Prozessöledukts mit einem Gehalt an polycyclischen Aromaten von mindenstens 3 Gew.-%, mit einem Gehalt an naphthenischen Kohlenstoffatomen weniger als 25 Gew.-%. Extrakte, Mieralölfraktionen oder Prozessöle werden als Prozessöledukte eingesetzt, deren Summe an C_{N} plus C_{A} 55 beträgt.

## Beschreibung

Gegenstand der Erfindung ist ein Verfahren zur Herstellung von naphthenischen Prozessölen mit einem hohen Anteil an naphthenischen Kohlenwasserstoffen und einem Gehalt an polycyclischen Aromaten von weniger als 3 Gew.-% nach IP 346.

Unter Prozessölen werden allgemein Kohlenwasserstoffgemische verstanden, die im Schmierölbereich sieden, jedoch üblicherweise nicht als und auch nicht in Verbindung mit Schmierölen eingesetzt werden. Die Prozessöle werden bei der Raffination von Erdöl gewonnen. Das Rohöl wird einer atmosphärischen Destillation unterzogen, wobei alle Produkte abgetrennt werden, welche unter Normaldruck bis etwa 350°C sieden. Als Rückstand nach dem Abdestillieren erhält man ein Gemisch aus Bitumen, Asphaltenen, Wachsen und Schwerölen. Die Schweröle werden zu verschiedenen Produkten weiterverarbeitet, neben Schmierölen auch zu den Prozessölen, die vorzugsweise als Weichmacher verwendet werden.

Die Prozessöle werden dabei je nach ihrem Gehalt an aromatischen Kohlenstoffatomen (C_{A}), naphthenischen Kohlenstoffatomen (C_{N}) und paraffinischen Kohlenstoffatomen (C_{P}), gemessen nach ASTM D 2140, unterschieden. Aromatische Prozessöle weisen teilweise unerwünscht große Mengen von polycyclischen Aromaten (PCA) auf. Unter polycyclischen Aromaten werden Verbindungen mit mehr als 2 kondensierten Aromatenkernen verstanden. Da die polycyclischen Aromaten, wie dass Benzo[a]pyren, in Verdacht stehen, krebserregend zu sein, sind bereits in der Vergangenheit Prozessöle mit hohem PCA-Gehalt nur noch eingeschränkt verwendet worden.

Gemäß der europäischen Richtlinie 769/76, ergänzt durch die Richtlinie 69/2005 vom 16. November 2005, ist nun eine Verwendung von Prozessölen nur noch zulässig, sofern diese einen Gehalt an polycyclischen Aromaten von weniger als 3 Gew.-%, gemessen nach der Methode IP 346, aufweisen.

Neben den Prozessölen mit hohen aromatischen Gehalten gibt es eine weitere Gruppe der häufig angewendeten Prozessöle, die naphthenischen Öle. Die naphthenischen Öle zeichnen sich durch einen hohen Grad an Cycloalkanen aus, können jedoch einen höheren Anteil an aromatischen Kohlenwasserstoffverbindungen als paraffinische Öle aufweisen. Entsprechend zeigen naphthenische Öle bessere Löseeigenschaften gegenüber Kautschuk als paraffinische Öle und lassen sich besser verarbeiten. Naphthenische Prozessöle für medizinische Produkte weisen üblicherweise keinen oder nur einen geringen Anteil Aromaten auf.

Die entsprechenden Prozessöle, die noch einen Gehalt an polycyclischen Aromaten von mehr als 3 Gew.-% nach IP 346 aufweisen, müssen künftig entweder als Sondermüll entsorgt werden oder können allenfalls dem Heizöl zugeschlagen werden, wobei die Verbrennung von dem Nachteil begleitet ist, dass bei Verbrennung des Heizöls höhere Schwefelemissionen entstehen. Auf Grund der geänderten Gesetzgebung dürfen daher solche Produkte zur Verringerung des Schwefelausstoßes künftig nicht mehr dem Heizöl zugeschlagen werden. Eine Verbrennung ist allenfalls noch in Anlagen mit speziellen Filtern zulässig. Zudem fallen auch bei der Produktion von Prozessölen mit einem niedrigen Gehalt an polycyclischen Aromaten, wie beispielsweise den Prozessölen TDAE und MES, Extraktionsrückstände mit einem hohen Gehalt an PCA an. Auch diese müssen künftig entsorgt werden bzw. dem Heizöl zugeschlagen werden.

Eine Möglichkeit, Prozessöle mit einem niedrigen Gehalt an polycyclischen Aromaten zu gewinnen, ist es, einen Primär-Extrakt, der durch Extraktion eines aus Mineralöl stammenden Schmieröldestillates gewonnen wird, erneut zu extrahieren. Ein solches Verfahren ist in der EP 0 417 980 B1 beschrieben. Das dabei erhaltene Prozessöl, z.B. TDAE, weist einen Gehalt von polycyclischen Aromaten auf, der geringer als 3 Gew.-% nach IP 346 ist. Nachteil dieses Verfahrens ist jedoch, dass als Sekundärextrakt, d.h. als "untere Phase", die aus der zweiten Extraktionskolonne abgegriffen wird, ein Produkt mit einer hohen Konzentration an polycyclischen Aromaten von bis zu 15 oder sogar über 20 Gew.-% erhalten wird.

Aus der US 4,521,296 A ist ein Verfahren zur Herstellung eines Kühlaggregatöls aus einem minderwertigen naphthenischen Rohöl bekannt. Hierbei wird ein Vakuumdestillat zunächst einer Extraktion unterzogen, um gezielt den Anteil an aromatischen Kohlenwasserstoffen einzustellen. Der so erhaltene Extrakt wird dann hydriert, um den Gehalt an polyzyklischen Aromaten weiter zu senken.

Die US 5,091,007 beschreibt ebenfalls Prozessöle mit naphthenischen und aromatischen Kohlenwasserstoffen. Die offenbarten Prozessöle haben dabei einen Anteil an naphthenischen Kohlenwasserstoffen zwischen 30 und 40 Gew.-%. Bevorzugt werden diese Prozessöle als Weichmacher für natürliche oder synthetische Kautschuken oder als Zusatz für Druckfarben eingesetzt.

Ein weiteres Prozessöl mit einem sehr hohen Anteil an aromatischen Kohlenwasserstoffen ist aus der WO 92/14779 A1 bekannt. Dieses Prozessöl enthält einen Anteil von aromatischen Kohlenwasserstoffen zwischen 30 und 55 Gew.-%. Das Prozessöl wird als Weichmacher in Kautschuken und als Extenderöl eingesetzt.

Auch in der US 2005/272850 A1 wird ein Weichmacheröl für Kautschuke beschrieben. Dieses Weichmacheröl wird aufwendig durch Mischung eines paraffinischen Grundöls und eines naphthenischen Grundöls geblendet, die beide zuvor einem Hydrotreating ausgesetzt wurden.

Die EP 0 214 717 A1 beschreibt weiterhin ein Hydrierungsverfahren, bei dem Prozessöle einer Hydrierung unterzogen werden, um den Gehalt an polyzyklischen aromatischen Kohlenwasserstoffen zu reduzieren.

Aufgabe der vorliegenden Erfindung ist es daher, ein Verfahren bereitzustellen, das eine Aufarbeitung der Prozessrückstände mit hohem PCA-Anteil erlaubt, wobei die erhaltenen Prozessöle kennzeichnungsfrei sein sollen, d.h. einen PCA-Gehalt von geringer als 3 Gew.-%, bestimmt nach IP 346, aufweisen sollen. Das Verfahren soll eine umweltfreundliche Nutzung der Sekundärextrakte und der Extraktionsrückstände aus der Gewinnung anderer Prozessöle erlauben. Zudem sollen die erhaltenen Prozessöle qualitativ so hochwertig sein, dass sie den Standardanforderungen der gängigen Prozessöle, z.B. als Weichmacher oder Extenderöl in Kautschuken oder Kautschukmischungen, als Öle in Druckfarben, als Transformatorenöle oder als Feedstock für die Herstellung hochwertiger Öle, z.B. von TDAE, und/oder als Metallbearbeitungsöle genügen.

Die Aufgabe wird erfindungsgemäß gelöst durch ein Verfahren zur Herstellung von naphthenischen Prozessölen, die eine Kohlenstoffverteilung C_{A} zu C_{N} zu C_{P} von 0 bis 30 Gew.-% zu 45 bis 65 Gew.-% zu 20 bis 55 Gew.-%, bestimmt nach ASTM D 2140, und einen Gehalt an polycyclischen Aromaten (PCA) von weniger als 3 Gew.-% nach IP 346 aufweisen, dadurch gekennzeichnet, dass
ein Prozessöledukt, das einen Gehalt an polycyclischen Aromaten von mindestens 3 Gew.-%, bestimmt nach IP 346, und einen Anteil von naphthenischen Kohlenstoffatomen C_{N} ≤ 25 Gew.-% aufweist,
unter Verwendung eines Metallkatalysators mit Wasserstoff hydriert wird bei Temperaturen von 200 bis 400°C und Drücken von 80 bis 250 bar und wobei als Prozessöledukte Extrakte, Mineralölfraktionen oder Prozessöle eingesetzt werden, deren Summe C_{A} plus C_{N} 55 beträgt, insbesondere eine Mischung verschiedener Ausgangsextrakte, wie eine Mischung aus einem Sekundärextrakt aus der TDAE-Herstellung und einem Sekundärextrakt aus der MES-Herstellung .

Weitere Ausführungsformen sind Gegenstand der Unteransprüche oder nachfolgend beschrieben.

Zur Durchführung des erfindungsgemäßen Verfahrens wird ein Prozessöledukt mit Wasserstoff unter den genannten Bedingungen über einen Metallkatalysator geleitet.

Als Katalysator werden bevorzugt Übergangsmetallkatalysatoren auf einem Träger verwendet. Bevorzugte Metallkatalysatoren sind Kobalt-, Nickel-, Molybdän-, Chrom-, Vanadium-, Nickel-Molybdän-Katalysatoren, Chrom-Vanadium-Katalysatoren, Metalloxide, Metallsulfide oder Kombinationen daraus. Als Trägersubstanzen haben sich die in der Technik üblichen Substanzen wie z.B. Aluminiumoxid oder Zeolithe bewährt. Grundsätzlich können übliche Hydrierkatalysatoren für die Hydrierung eingesetzt werden.

Die Hydrierung wird bevorzugt bei Temperaturen von 250 bis 400 °C, besonders bevorzugt 300 bis 375 °C, durchgeführt. Der Reaktor wird bevorzugt mit einem Druck von 80 bis 200 bar betrieben. Die Hydrierung wird bevorzugt mit einer mittleren Verweilzeit von 6 bis 60 min durchgeführt.

Bei Durchführung des erfindungsgemäßen Verfahrens werden Prozessöle erhalten, die einen Anteil an naphthenischen Kohlenstoffatomen von C_{N} 30 bis 65 Gew.-%, bestimmt nach ASTM D 2140, aufweisen. Überraschenderweise lassen sich mit dem erfindungsgemäßen Verfahren Prozessöle gewinnen, deren C_{N}-Gehalt > 40 bzw. 45 Gew.-% ist, siehe ASTM D 2140. Nach der bisherigen herrschenden Meinung und entsprechend der ASTM D 2140 ist in Prozessölen maximal ein Gehalt von 45 Gew.-% naphthenischen Kohlenstoffatomen möglich. Die erhaltenen Prozessöle weisen zudem einen Gehalt von weniger als 3 Gew.-% polycyclischen Aromaten, bestimmt nach IP 346, auf.

Als Edukt für die Hydrierung werden Prozessöledukte eingesetzt, die einen Gehalt an polycyclischen Aromaten von > 3 Gew.-%, bestimmt nach IP 346, aufweisen, bevorzugt einen Gehalt an polycyclischen Aromaten von 10 bis 30 Gew.-%, wobei es sich bei den Prozessöledukten bespielsweise um die bei der TDAE- oder MES-Herstellung anfallenden Sekundärextrakte handelt. Ein solches Verfahren ist aus der EP 0 417 980 B1 bekannt. Der dort erhaltene Sekundärextrakt kann als Einsatzstoff für das erfindungsgemäße Verfahren genutzt werden. Durch Wahl des Eduktes und ggf. Mischung verschiedener Ausgangsextrakte können bestimmte Kohlenwasser-stoffverteilungen der Produkte gezielt erreicht werden.

Zur Gewinnung eines herkömmlichen TDAEs wird üblicherweise Rohöl einer atmosphärischen Destillation zur Abtrennung von Gas, Naphtha und Kerosinfraktionen unterzogen. Der atmosphärische Rückstand wird in einer Vakuumdestillation in einen Vakuumrückstand und ein oder mehrere Destillate aufgetrennt. Das Destillat wird anschließend in einer Extraktion mit einem geeigneten Lösungsmittel in ein Raffinat und einen Extrakt (Primärextrakt), das DAE, aufgetrennt. Aus dem Raffinat werden Grundöl und Wachse erhalten. Eine zweite Extraktion des Primärextrakts liefert das TDAE, wobei bei geeigneter Wahl der Reaktionsbedingungen ein Prozessöl erhalten werden kann, das einen Gehalt an polycyclischen Aromaten 3 Gew.-% aufweist. Außerdem fällt bei der zweiten Extraktion ein weiterer Extrakt, der Sekundärextrakt an. Dieser Sekundärextrakt kann alleine oder in Mischung, z.B. mit anderen Extrakten oder Prozessölen, als Edukt für das erfindungsgemäße Verfahren genutzt werden und wird entsprechend in einem weiteren Prozessschritt hydriert.

Die naphthenischen Prozessöle lassen sich durch das erfindungsgemäße Verfahren in hohen Ausbeuten erhalten. Es fallen bei entsprechender Verfahrensführung keine kennzeichnungspflichtigen, umweltschädlichen Prozessöle mehr an. Vielmehr können über das erfindungsgemäße Verfahren aus dem kennzeichnungspflichtigen und umwelttechnisch bedenklichen DAE naphthenische, kennzeichnungsfreien Prozessöle erhalten werden.

Erfindungsgemäß können ebenso andere Substanzen als Prozessöledukt eingesetzt werden, sofern die Summe C_{A} und C_{N} in dem Prozessöledukt höher als die Summe des angestrebten C_{N}-Gehalts plus dem Restgehalt an Aromaten ist und/oder diese einen Gehalt an polycyclischen Aromaten von > 3 Gew.-%, gemessen nach IP 346, aufweisen. Beispielsweise werden als Prozessöledukte solche Extrakte, Mineralölfraktionen oder Prozessöle eingesetzt, deren Summe C_{A} plus C_{N} 55 beträgt.

Das erfindungsgemäße Verfahren erlaubt es somit, ein Prozessöledukt, das einen hohen Gehalt an polycyclischen Aromaten hat und somit gemäß der neuen EU-Richtlinie nicht mehr vertrieben werden darf sowie ohnehin aus gesundheitlicher und umweltpolitischer Sicht bedenklich ist, zu einem hochwertigen Produkt umzuwandeln. Zudem lassen sich die Ausgangsstoffe so einer anderen Verwendung zuführen und müssen nicht mehr dem Heizöl zu gegeben werden. Durch die Vermeidung von Heizöl wird daher auch der CO₂-Ausstoß reduziert. Überraschenderweise zeigt dabei das erhaltene naphthenische Prozessöl trotz des geringen Gehaltes an PCA je nach Reaktionsbedingungen noch einen hohen Gehalt an aromatischen Kohlenstoffatomen C_{A}, der bevorzugt zwischen 0 und 30 Gew.-%, bestimmt nach ASTM D 2140, liegt. Bevorzugt liegt die Summe aus C_{A} und C_{N} zwischen 50 und 70. Ein hoher Gehalt an aromatischen Kohlenwasserstoffverbindungen im Prozessöl verbessert die Nassrutschfestigkeit eines Autoreifens und das Kurvenfahrverhalten auch auf trockener Straße, ein hoher C_{N}-Gehalt des Prozessöls verbessert den Rollwiderstand eines Autoreifens.

Das erfindungsgemäß hergestellte Prozessöl wird als Weichmacher oder Extenderöl für Kautschuke und Kautschukmischungen, basierend auf natürlichen und synthetischen Kautschuken, oder thermoplastische Elastomere eingesetzt. Ebenso kann es als Rohstoff für medizinische oder technische Weißöle, als Druckfarbenöl, z.B. für Bunt- und Schwarzfarben beim Zeitungsdruck, Transformatorenöl, Trennmittel im Bautenschutz oder spezielles Metallbearbeitungsöl verwendet werden, auch bei der Industriefettherstellung findet es Verwendung. Besonders bevorzugt wird das erfindungsgemäß hergestellte Prozessöl als Weichmacher in Reifen oder technischen Gummiwaren, als Weißöl oder als Metallbearbeitungsöl, z.B. beim Ziehen von Kupferdraht, eingesetzt.

Das erfindungsgemäße Verfahren wird anhand der Figuren beispielhaft erläutert. Es zeigt:
- Figur 1:: Ein Fließbild des aus dem Stand der Technik bekannten Extraktionsverfahrens zur Herstellung von TDAE und MES.
- Figur 2:: Ein Fließbild einer Ausführungsform des erfindungsgemäßen Verfahrens.

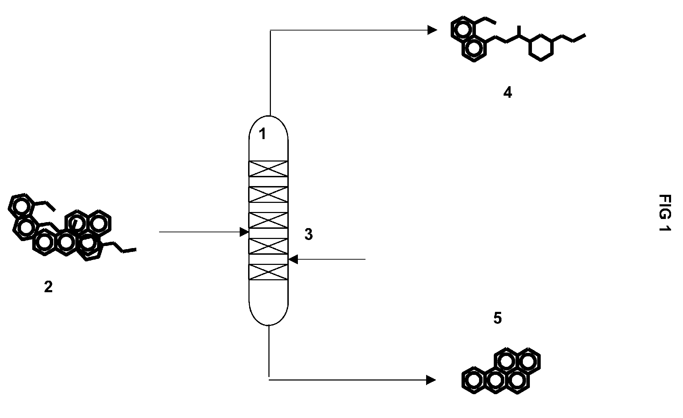

Figur 1 zeigt den zweiten Extraktionsschritt der herkömmlichen Extraktion zur Herstellung von TDAE oder MES. Einer Extraktionskolonne 1 wird dabei der Primär-Extrakt 2 zugeführt. Der Primär-Extrakt ist eine Mischung verschiedener Kohlenwasserstoffverbindungen, darunter aromatische Kohlenwasserstoffverbindungen und polycyclische Aromaten. Gleichzeitig wird über die Leitung 3 Lösungsmittel in die Extraktionskolonne gegeben. Am Kopf der Kolonne wird das Raffinat 4, z.B. ein TDAE oder MES, entnommen. Gleichzeitig wird dem Kolonnensumpf ein Sekundärextrakt 5 entnommen, der einen hohen Anteil polycyclischer Aromaten enthält.

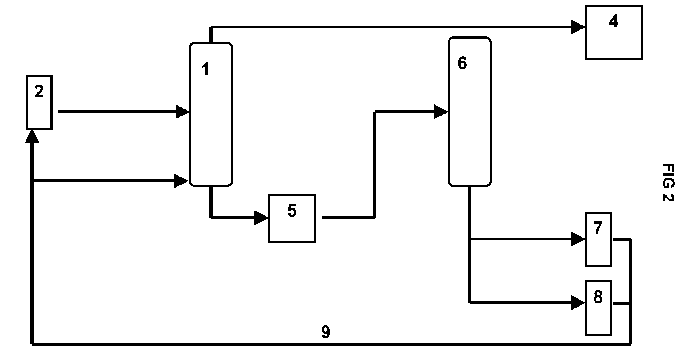

In Figur 2 ist der Ablauf des erfindungsgemäßen Verfahrens zu erkennen. Ein Prozessöl 5 mit einem hohen Anteil polycyclischer Aromaten, wie es beispielsweise aus dem in Figur 1 gezeigten Verfahren erhalten wird, wird einem Hydrierungsreaktor 6 zugeführt und dort mit Wasserstoff hydriert. Dem Hydrierungsreaktor 6 werden ein naphthenisches Prozessöl 7 und ein Stripöls 8 entnommen. Das naphthenische Prozessöl 7 hat einen PCA-Gehalt von unter 3 Gew.-%. In einer weniger bevorzugten Ausführungsform kann das Verfahren auch so durchgeführt werden, dass Endprodukte mit einem relativ hohen Restgehalt an Aromaten, deren PCA-Gehalt gemäß IP 346 > 3 Gew.-% sein kann, erhalten werden. Diese relativ hocharomatischen Fraktionen können über Leitung 9 dem Primärextrakt 2 zugegeben oder alternativ in die Extraktionskolonne 1 gegeben werden und sind als Feedstock für die Herstellung kennzeichnungsfreier Prozessöle sowohl alleine als auch im Gemisch mit Primärextrakt geeignet.

### Beispiele:

### Beispiel 1

Ein Sekundärextrakt mit einem Gehalt an polycyclischen Aromaten von 45 Gew.% nach IP 346 und C_{N}-Gehalt von 22 Gew.-% und einem C_{P}-Gehalt von 23 Gew.-% wurde bei einer Temperatur von 340°C und einem Druck von 200 bar mit Wasserstoff in einen Hydrierreaktor gegeben. Der Reaktor enthielt einen Nickel-Molybdän Katalysator (Axens HR548 der Evonik). Die Hydrierung wurde durchgeführt bei einer mittleren Verweilzeit von 25 min. Es wurden 94 % naphthenisches Prozessöl und 6 % Stripöl erhalten.

Das erhaltene naphthenische Prozessöl wies die in Tabelle 1 angegebenen Eigenschaften auf.

**Tabelle 1: Eigenschaften des erhaltenen naphtenischen Prozessöls aus Beispiel 1**

| | Eigenschaften des Prozessöls gemäß Beispiel |
|---|---|
| Benz[a]pyren [ppm] | < 1 |
| Summe PAH [ppm] gem. RL 2005/69 EC | <10 |
| Viskosität bei 40 °C [mm²/s] | 612 |
| Viskosität bei 100 °C [mm²/s] | 39 |
| C_{A} nach ASTM D 2140 [Gew.-%] | 3 |
| C_{N} nach ASTM D 2140[Gew.-%] | 57 |
| C_{P} nach ASTM D 2140[Gew.-%] | 40 |
| Anilinpunkt [°C] | 93 |

### Beispiel 2

Es wurden zu dem die Eigenschaften verschiedner Produkte, die über das erfindungsgemäße Verfahren erhalten mit denen eines herkömmlichen Prozessöls TDAE verglichen. Tabelle 2 zeigt eine Gegenüberstellung der verschiedenen Herstellungsbedingungen und Daten von drei erfindungsgemäß hergestellten Produkten (Hydrierprodukten) im Vergleich zu einem TDAE. Die Hydrierprodukte wurden analog zum vorbeschriebenen Beispiel hergestellt. Die Mischung aus Primärextrakt zu Sekundarextrakt betrug dabei 50 : 50.

**Tabelle 2: Herstellungsbedingungen und Eigenschaften der erfindungsgemäß hergestellten Prozessöle und eines Vergleichsprozessöl**

| | Bestimmungsmethode | Vivatec^{®} 500 (TDAE) | Hydrierprodukte aus Primärextrakt (DAE) | Hydrierprodukte aus Primär-Sekundärextrakt-Gemisch | Hydrierprodukte aus Sekundärextrakt |
|---|---|---|---|---|---|
| **Katalysator** | | | Axens HR 548 A1024 | Axens HR 548 A1024 | Axens HR 548 A1024 |
| **Reaktortemperatur [°C]** | | | 310 | 330 | 350 |
| **Druck [bar]** | | | 200 | 200 | 200 |
| **Verweilzeit [min.]** | | | 18 | 18 | 16 |
| **DMSO-Extrakt [%]** | IP 346 | 2,6 | 2,8 | 2,9 | 2,8 |
| **Benzo-(a)-pyren [ppm]** | GC-MS | 0,4 | 0,3 | 0,1 | 0,5 |
| **Summe PAH [ppm]** | GC-MS | 5,7 | 2,5 | 3,1 | 4,2 |
| **Viskosität 100 °C [mm²/s]** | DIN 51562 T. 1 | 21,1 | 19,1 | 12,6 | 20,8 |
| **Schwefel [%]** | DIN EN ISO 14596 | 1,03 | 0,15 | 0,12 | 0,10 |
| **CA [%]** | DIN 51378 | 25 | 24 | 25 | 24 |
| **CN [%]** | DIN 51378 | 30 | 33 | 42 | 48 |
| **CP [%]** | DIN 51378 | 45 | 44 | 33 | 28 |
| **AP [°C]** | DIN ISO 2977 | 70 | 70 | 64 | 61 |

Die erhaltenen Prozessöle wurden in Compounds (Kautschukmischungen) eingearbeitet. Die Zusammensetzung der Compounds ergibt sich aus Tabelle 3.

**Tabelle 3: Zusammensetzung der Compounds**

| **Rohmaterial** | **Produkt, Hersteller** | **Vergleich** | **Beispiel 2a** | **Beispiel 2b** | **Beispiel 2c** |
|---|---|---|---|---|---|
| Buna VSL 5025-0 HM | SSBR, Lanxess | 70 | 70 | 70 | 70 |
| Buna CB 24 | NdBR, Lanxess | 30 | 30 | 30 | 30 |
| Ultrasil 7000 GR | Silika, Evonik | 80 | 80 | 80 | 80 |
| SI 75 | Silan, Evonik | 5,8 | 5,8 | 5,8 | 5,8 |
| Corax N 234 | Ruß, Evonik | 10 | 10 | 10 | 10 |
| Vulkanox 4020/LG | 6PPD, Lanxess | 1 | 1 | 1 | 1 |
| Vulkanox HS/LG | TMQ, Lanxess | 1 | 1 | 1 | 1 |
| Zinkweiss Rotsiegel | ZnO, Grillo | 3 | 3 | 3 | 3 |
| Stearinsäure | | 1 | 1 | 1 | 1 |
| Vulkacit D/C | Sulfenamid, Lanxess | 2 | 2 | 2 | 2 |
| Vulkacit CZ/C | Sulfenamid, Lanxess | 1,5 | 1,5 | 1,5 | 1,5 |
| Schwefel | | 1,8 | 1,8 | 1,8 | 1,8 |
| Vivatec 500 | TDAE-Öl, H&R | 37,5 | | | |
| Hydrierprodukte aus Primärextrakt | | | 37,5 | | |
| Hydrierprodukte aus Primär- /Sekundärextrakt-Gemisch | | | | 37,5 | |
| Hydrierprodukte aus Sekundärextrakt | | | | | 37,5 |

Die Compunds wurden vulkanisiert und die Eigenschaften der erhaltenen Vulkanisate gemessen. Diese sind in Tabelle 4 dargestellt.

**Tabelle 4: Härte, Rückprallelastizität, Tangens Delta und Abrieb der erhaltenen Vulkanisate**

| | | **Vergleich** | **Beispiel 2a** | **Beispiel 2b** | **Beispiel 2c** |
|---|---|---|---|---|---|
| **Härte A/D Standard** | Härte ShA bei 23 °C | 60 | 62 | 61 | 61 |
| | Härte ShA bei 70 °C | 59 | 59 | 60 | 54 |
| **Rückprallelastizität** | R (23°C) | 33,5 | 32,2 | 31,5 | 30,8 |
| | R (70°C) | 55 | 54 | 55 | 57 |
| **Zugversuch Stab S2** | Bruchdehnung: | 440 | 425 | 405 | 385 |
| | Bruchspannung: | 18,5 | 18,1 | 17,9 | 17,6 |
| **Tangens Delta** | 0 °C | 0,52 | 0,50 | 0,47 | 0,48 |
| | 60 °C | 0,13 | 0,13 | 0,12 | 0,11 |
| **Abrieb** | Abrieb DIN 53516 | 102 | 105 | 108 | 109 |

Es zeigt sich, dass durch Hydrierung der genannten Rohstoffe Prozessöle hergestellt werden, die Werte aufweisen, die zu einem TDAE durchaus vergleichbare Werte haben. Dabei ist zu beobachten, dass mit Zunahme des NAP-Gehaltes der Rollwiderstand (Tangens Delta @ 60 °C) besser wird, mit Abnahme des NAP-Gehalts Abrieb und Nassrutschfestigkeit (Tangens Delta @ 0 °C). Dieses versetzt den Anwender, nicht nur bei Reifen, in die Lage, selektiv diese Schlüsseleigenschaft anpassen zu können. Eine solche Anpassung ist bisher bei den herkömmlichen Prozessölen nicht möglich gewesen.

## Patentansprüche

1. Verfahren zur Herstellung von naphthenischen Prozessölen, die eine Kohlenstoffverteilung C_{A} zu C_{N} zu C_{P} von 0 bis 30 Gew.-% zu 45 bis 65 Gew.-% zu 20 bis 55 Gew.-%, bestimmt nach ASTM D 2140, und einen Gehalt an polycyclischen Aromaten (PCA) von weniger als 3 Gew.-% nach IP 346 aufweisen,
**dadurch gekennzeichnet, dass**
ein Prozessöledukt, das einen Gehalt an polycyclischen Aromaten von mindestens 3 Gew.-%, bestimmt nach IP 346, und einen Anteil von naphthenischen Kohlenstoffatomen C_{N} ≤ 25 Gew.-% aufweist,
unter Verwendung eines Metallkatalysators mit Wasserstoff hydriert wird bei Temperaturen von 200 bis 400°C und Drücken von 80 bis 250 bar und wobei als Prozessöledukte Extrakte, Mineralölfraktionen oder Prozessöle eingesetzt werden, deren Summe C_{A} plus C_{N} 55 beträgt.

2. Verfahren gemäß Anspruch 1, **dadurch gekennzeichnet, dass** die Hydrierung bei Temperaturen von 250 bis 400 °C, bevorzugt 300 bis 375°C durchgeführt wird.

3. Verfahren gemäß einem der Ansprüche 1 oder 2, **dadurch gekennzeichnet, dass** der Metallkatalysator basiert auf einem Nickel-, Kobalt-, Molybdän-, Chrom-, Vanadium-, Nickel-Molybdän, Chrom-Vanadium-Katalysator, einem Metalloxid, einem Metallsulfid oder einer Mischung daraus.

4. Verfahren gemäß einem der vorhergehenden Ansprüche, **dadurch gekennzeichnet, dass** als Prozessöledukt eine Mischung verschiedener Ausgangsextrakte eingesetzt wird, insbeosndere eine Mischung aus einem Sekundärextrakt aus der TDAE-Herstellung und einem Sekundärextrakt aus der MES-Herstellung.

5. Verfahren gemäß einem der vorhergehenden Ansprüche, **dadurch gekennzeichnet, dass** die mittlere Verweilzeit 6 bis 60 min beträgt.

6. Verfahren gemäß einem der vorhergehenden Ansprüche, **dadurch gekennzeichnet, dass** der Anilinpunkt des naphthenischen Prozessöls zwischen 30 und 115°C, bestimmt nach DIN ISO 2977, liegt.
